# FASCICULE DE BREVET EUROPEEN

(11) **EP 1 252 970 B1**
(45) Date de publication et mention de la délivrance du brevet: **14.10.2009**
(21) Numéro de dépôt: 01810411.7
(22) Date de dépôt: 25.04.2001
(51) Int. Cl.: B23Q 11/14

(54) **Procédé d'optimisation du fonctionnement d'une machine d'usinage par ajustement de sa température**
Optimierungsverfahren zum Betrieb einer Werkzeugmaschine durch Einstellung der Temperatur
Method for optimising the operating conditions of a machine tool by adjusting temperature

(43) Date de publication de la demande: 30.10.2002
(73) Titulaire: TORNOS S.A., 2740 Moutier (CH)
(72) Inventeur: Schuettel, Patrick, 2762 Roches (CH)
(74) Mandataire: BOVARD AG

(56) Documents cités:
- EP-A- 0 347 821
- GB-A- 987 368
- GB-A- 2 114 924
- US-A- 2 734 415
- US-A- 5 476 137

## Description

L'invention se rapporte à un procédé d'optimisation du fonctionnement d'une machine d'usinage, (voir par exemple GB-A-2 114 924).

Par machine d'usinage, on désigne une machine d'usinage d'au moins une pièce par enlèvement de matière au moyen d'au moins un outil coupant.

L'invention se rapporte également à une installation pour la mise en oeuvre de ce procédé et à la machine dont le fonctionnement est optimisé par la mise en oeuvre de ce procédé.

L'invention vise à l'optimisation du fonctionnement d'une machine d'usinage d'au moins une pièce par enlèvement de matière au moyen d'au moins un outil coupant, cette machine, d'une part, comprenant un certain nombre d'éléments constitutifs dont une structure, tel un bâti, et des organes moteurs produisant des actions d'entraînement et de déplacement d'au moins l'un des éléments que sont l'outil et la pièce usinée et, d'autre part, mettant en oeuvre une installation de lubrification et de refroidissement de l'outil et de la pièce au moyen d'un fluide, ci-après dit liquide de lubrification.

L'invention intéresse plus particulièrement, mais non exclusivement un procédé d'optimisation du fonctionnement d'une machine de tournage.

Dans le domaine des machines-outils, lorsqu'on souhaite qu'une machine d'usinage fonctionne d'une manière stable, c'est à dire, produise des pièces de qualité choisie et constante, il est connu de climatiser le local dans laquelle cette machine se trouve et/ou de stabiliser la température du liquide de lubrification.

Ces solutions ont leurs avantages mais ne donnent pas des résultats totalement satisfaisants.

Un résultat que l'invention vise à obtenir est un procédé d'optimisation du fonctionnement d'une machine d'usinage qui remédie à ces inconvénients.

A cet effet, l'invention a pour objet un procédé selon lequel,
- au moins de manière empirique, on détermine au moins une valeur de température du liquide de lubrification, dite valeur de consigne, à laquelle la machine d'usinage fonctionne d'une manière stable, c'est à dire, produit des pièces de qualité choisie et constante,
- lors de l'utilisation de la machine d'usinage pour la production de pièces,
   . d'une part, on modifie la température du liquide de lubrification de manière à l'ajuster à la valeur de la température de consigne, et
   . d'autre part, on modifie la valeur de la température d'au moins l'un des éléments constitutifs de cette machine de manière à amener sa température à une valeur voisine de celle de la température du liquide de lubrification.

Ce procédé est caractérisé en ce que pour modifier la valeur de la température d'au moins l'un des éléments constitutifs (5, 6) de la machine et l'amener à une valeur voisine de la valeur de température de consigne :
- on confine au moins partiellement la machine dans une enceinte comprenant au moins deux ouvertures de section appropriées pour l'entrée puis la sortie d'un flux d'air,
- en agissant au niveau d'au moins l'une des ouvertures, on fait circuler dans l'enceinte un flux d'air dont on a préalablement modifié la valeur de la température pour l'ajuster à une valeur sensiblement égale à celle de la température de consigne.

L'invention a également pour objet une installation pour la mise en oeuvre de ce procédé selon la revendication 5 ainsi que la machine dont le fonctionnement est optimisé selon la revendication 10.

L'invention sera bien comprise à la lecture de la description ci-après faite à titre d'exemple non limitatif, en regard du dessin ci-annexé qui représente schématiquement :

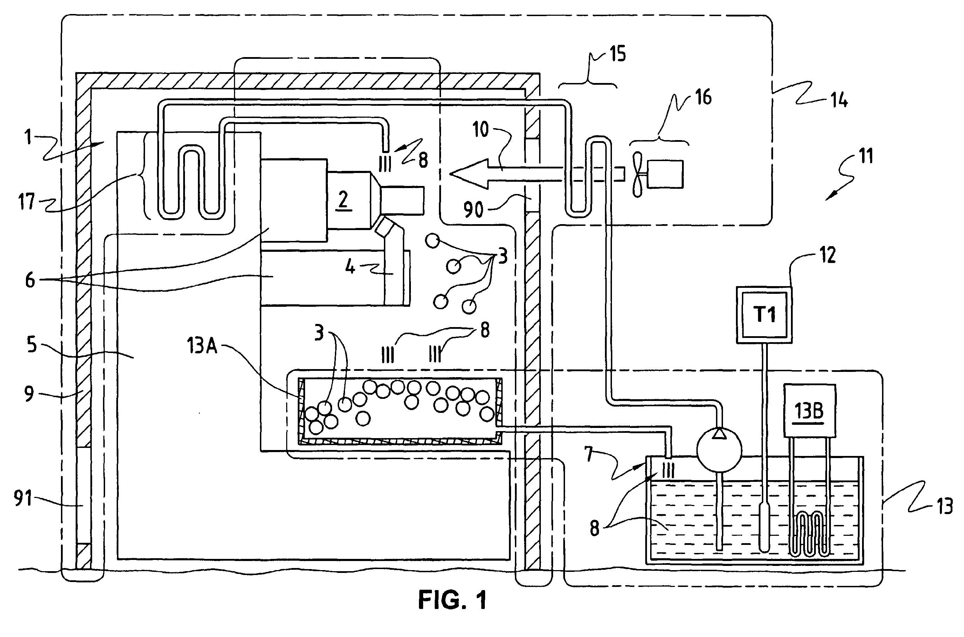

Figure 1 : une vue en coupe d'une installation pour la mise en oeuvre du procédé selon l'invention.

En se reportant au dessin, on voit une machine 1 d'usinage d'au moins une pièce 2 par enlèvement de fragments 3 de matière au moyen d'au moins un outil 4 coupant.

Par exemple, la machine 1 est une machine de tournage, mais cela n'est pas limitatif et n'apparaît d'ailleurs pas de manière flagrante sur le dessin.

Classiquement, la machine 1 :
- d'une part, comprend un certain nombre d'éléments constitutifs 5, 6 dont au moins une structure 5, tel un bâti 5, et des organes 6 moteurs produisant des actions d'entraînement et déplacement d'au moins l'un des éléments 2, 4 que sont l'outil 4 et la pièce 2 usinée, et
- d'autre part, met en oeuvre une installation 7 de lubrification et de refroidissement de l'outil 4 et de la pièce 2 au moyen d'un fluide 8, ci-après dit liquide 8 de lubrification.

Pour optimiser le fonctionnement de la machine 1 d'usinage :
- au moins de manière empirique, on détermine au moins une valeur T1 de température du liquide 8 de lubrification, dite valeur T1 de consigne, à laquelle la machine 1 d'usinage fonctionne d'une manière stable, c'est à dire, produit des pièces 2 de qualité choisie et constante,
- lors de l'utilisation de la machine 1 d'usinage pour la production de pièces 2,
   . d'une part, on modifie la température du liquide 8 de lubrification de manière à l'ajuster à la valeur T1 de la température de consigne, et
   . d'autre part, on modifie la valeur de la température d'au moins l'un des éléments constitutifs 5, 6 de cette machine 1 de manière à amener sa température à une valeur voisine de celle de la température du liquide 8 de lubrification.

D'une manière remarquable, pour modifier la valeur de la température de la machine 1 et l'amener à une valeur voisine de la valeur T1 de température de consigne :
- on confine au moins partiellement la machine 1 dans une enceinte 9 comprenant au moins deux ouvertures 90, 91 de section appropriée pour l'entrée puis la sortie d'un flux 10 d'air,
- en agissant au niveau d'au moins l'une des ouvertures 90, 91, on fait circuler dans l'enceinte 9 un flux 10 d'air dont on a préalablement modifié la valeur de la température pour l'ajuster à une valeur sensiblement égale à celle T1 de la température de consigne.

Le respect de ce procédé permet d'obtenir le résultat essentiel de l'invention, à savoir, l'optimisation du fonctionnement d'une machine 1 d'usinage par réduction des différents gradients de température qui existent dans cette machine 1 entre, d'une part, la température du liquide 8 de lubrification et, d'autre part, la température de chacun des différents éléments 5, 6 constitutifs de ladite machine 1.

Le respect de ce procédé permet également d'accélérer notablement la mise à température optimale de fonctionnement de la machine 1 d'usinage.

D'une manière également remarquable, pour modifier la valeur de la température du flux 10 d'air injecté dans l'enceinte et l'ajuster à une valeur sensiblement égale à celle T1 de consigne, on lui fait échanger des calories avec le liquide 8 de lubrification.

Le respect de ces étapes de procédé permet d'obtenir l'optimisation du fonctionnement d'une machine d'usinage, sans avoir recours à une solution onéreuse.

D'une manière encore remarquable, pour modifier la valeur de la température de la machine 1 et l'amener à une valeur voisine de celle T1 de consigne, on fait en plus circuler le liquide 8 de lubrification au contact d'au moins l'un des éléments constitutifs 5, 6 de la machine 1.

De manière préférentielle, on fait circuler le liquide 8 de lubrification à l'intérieur d'au moins l'un des éléments constitutifs 5, 6 de la machine 1.

De manière remarquable, pour modifier la valeur de la température du liquide 8 de lubrification, de manière à l'ajuster à la valeur T1 de la température de consigne, on réalise au moins l'une des opérations consistant à apporter ou retirer des calories au liquide 8 de lubrification.

L'invention se rapporte également à une installation 11 pour la mise en oeuvre du procédé.

Cette installation 11 pour la mise en oeuvre du procédé de l'invention est remarquable en ce qu'elle comprend :
- un premier dispositif 12 pour, au moins de manière empirique, déterminer au moins une valeur T1 de température du liquide 8 de lubrification, dite valeur T1 de consigne, à laquelle la machine 1 d'usinage fonctionne d'une manière stable, c'est à dire, produit des pièces 2 de qualité choisie et constante,
- un second dispositif 13 pour, lors de l'utilisation de la machine 1 d'usinage pour la production de pièces 2, modifier la température du liquide 8 de lubrification de manière à l'ajuster à la valeur T1 de la température de consigne, et
- un troisième dispositif 14, pour, lors de l'utilisation de la machine 1 d'usinage pour la production de pièces 2, modifier la valeur de la température de cette machine 1 de manière à l'amener à une valeur voisine de celle de la température du liquide 8 de lubrification,
- une enceinte 9 de confinement au moins partiel de la machine 1, cette enceinte 9 comprenant au moins deux ouvertures 90, 91 de section appropriée pour autoriser le passage d'un flux 10 d'air,
- un deuxième appareil 15 dit d'ajustement de la température du flux 10 d'air à une valeur sensiblement égale à celle T1 de la température de consigne,
- un troisième appareil 16 dit de mise en circulation du flux 10 d'air dans l'enceinte 9 par au moins l'une des ouvertures 90, 91 et à travers le premier appareil 14.

Cette installation est également remarquable en ce que le premier dispositif 12 comprend des sondes de température reliées à un appareil enregistreur.

L'homme du métier est à même d'examiner le et/ou les enregistrements et de déterminer la température du liquide de lubrification à laquelle la machine produit des pièces de qualité constante de manière stable.

Cette installation est également remarquable en ce que le second dispositif 13 comprend au moins l'un des deux éléments 13A, 13B que sont :
- un récipient 13A de collecte des fragments 3 de matière détachés de la pièce 2 et du liquide 8 de lubrification,
- un premier appareil 13B consistant en un appareil thermique permettant d'apporter ou retirer des calories au liquide 8 de lubrification pour amener sa température à la valeur T1 de consigne.

On comprend donc que le liquide 8 de lubrification :
- peut acquérir des calories par contact avec les fragments 3 de matière détachés des pièces 2 et/ou
- peut acquérir ou perdre des calories par passage dans un premier appareil 13B consistant en un appareil thermique qui permet de stabiliser la température du liquide 8 de lubrification à une valeur proche de la température T1 de consigne.

D'une manière également remarquable, le deuxième appareil 15, dit d'ajustement de la température du flux 10 d'air à une valeur sensiblement égale à celle T1 de la température de consigne, consiste en un échangeur 15 thermique qui permet par ailleurs la circulation du liquide 8 de lubrification.

Le troisième appareil 16, dit de mise en circulation du flux 10 d'air consiste en un ventilateur.

D'une manière encore remarquable, le troisième dispositif 14 comprend au moins un tronçon 17 de conduite qui, d'une part, permet la circulation du liquide 8 de lubrification et, d'autre part, traverse au moins l'un des éléments constitutifs 5, 6 de la machine 1.

Ces dernières particularités techniques permettent de renforcer l'efficacité du procédé de l'invention en accélérant la mise à température de la machine 1.

## Revendications

1. Procédé d'optimisation du fonctionnement d'une machine (1) d'usinage d'au moins une pièce (2) par enlèvement de matière (3) au moyen d'au moins un outil (4) coupant, cette machine (1), d'une part, comprenant un certain nombre d'éléments (5, 6) constitutifs dont une structure (5), tel un bâti (5), et des organes (6) moteurs produisant des actions d'entraînement et déplacement d'au moins l'un des éléments (2, 4) que sont l'outil (4) et la pièce (2) usinée et, d'autre part, mettant en oeuvre une installation (7) de lubrification et de refroidissement de l'outil (4) et de la pièce (2) au moyen d'un fluide (8), ci-après dit liquide (8) de lubrification,
selon ce procédé,
au moins de manière empirique, on détermine au moins une valeur (T1) de température du liquide (8) de lubrification, dite valeur (T1) de consigne, à laquelle la machine (1) d'usinage fonctionne d'une manière stable, c'est à dire, produit des pièces (2) de qualité choisie et constante,
. lors de l'utilisation de la machine (1) d'usinage pour la production de pièces (2),
.. d'une part, on modifie la température du liquide (8) de lubrification de manière à l'ajuster à la valeur (T1) de la température de consigne, et
.. d'autre part, on modifie la valeur de la température d'au moins l'un des éléments constitutifs (5, 6) de cette machine (1) de manière à amener sa température à une valeur voisine de celle de la température du liquide (8) de lubrification,
ce procédé étant **caractérisé en ce que** pour modifier la valeur de la température d'au moins l'un des éléments constitutifs (5, 6) de la machine (1) et l'amener à une valeur voisine de la valeur (T1) de température de consigne :
- on confine au moins partiellement la machine (1) dans une enceinte (9) comprenant au moins deux ouvertures (90, 91) de section appropriée pour l'entrée puis la sortie d'un flux (10) d'air,
- en agissant au niveau d'au moins l'une des ouvertures (90, 91), on fait circuler dans l'enceinte (9) un flux (10) d'air dont on a préalablement modifié la valeur de la température pour l'ajuster à une valeur sensiblement égale à celle (T1) de la température de consigne.

2. Procédé selon la revendication 1, **caractérisé en ce que** pour modifier la valeur de la température du flux (10) d'air injecté dans l'enceinte et l'ajuster à une valeur sensiblement égale à celle (T1) de consigne, on lui fait échanger des calories avec le liquide (8) de lubrification.

3. Procédé selon la revendication 1 ou 2, **caractérisé en ce que** pour modifier la valeur de la température de la machine (1) et l'amener à une valeur voisine de celle (T1) de consigne, on fait en plus circuler le liquide (8) de lubrification au contact d'au moins l'un des éléments constitutifs (5, 6) de la machine (1).

4. Procédé selon l'une quelconque des revendications 1 à 3, **caractérisé en ce que** pour modifier la valeur de la température du liquide (8) de lubrification, de manière à l'ajuster à la valeur (T1) de la température de consigne, on réalise au moins l'une des opérations consistant à apporter ou retirer des calories au liquide (8) de lubrification.

5. Installation pour la mise en oeuvre du procédé selon l'une quelconque des revendications 1 à 4, **caractérisée en ce qu'**elle comprend :
- un premier dispositif (12) pour, au moins de manière empirique, déterminer au moins une valeur (T1) de température du liquide (8) de lubrification, dite valeur (T)1 de consigne, à laquelle la machine (1) d'usinage fonctionne d'une manière stable, c'est à dire, produit des pièces (2) de qualité choisie et constante,
- un second dispositif (13) pour, lors de l'utilisation de la machine (1) d'usinage pour la production de pièces (2), modifier la température du liquide (8) de lubrification de manière à l'ajuster à la valeur (T1) de la température de consigne, et
- un troisième dispositif (14), pour, lors de l'utilisation de la machine (1) d'usinage pour la production de pièces (2), modifier la valeur de la température de cette machine (1) de manière à l'amener à une valeur voisine de celle de la température du liquide (8) de lubrification,
- une enceinte (9) de confinement au moins partiel de la machine (1), cette enceinte (9) comprenant au moins deux ouvertures (90, 91) de section appropriée pour autoriser le passage d'un flux (10) d'air,
- un deuxième appareil (15) dit d'ajustement de la température du flux (10) d'air à une valeur sensiblement égale à celle (T1) de la température de consigne,
- un troisième appareil (16) dit de mise en circulation du flux 10 d'air dans l'enceinte (9) par au moins l'une des ouvertures (90, 91) et à travers le premier appareil (14).

6. Installation selon la revendication 5, **caractérisée en ce que** le premier dispositif (12) comprend des sondes de température reliées à un appareil enregistreur.

7. Installation selon la revendication 5, **caractérisée en ce que** le second dispositif (13) comprend au moins l'un des deux éléments (13A, 13B) que sont :
- un récipient (13A) de collecte des fragments (3) de matière détachés de la pièce (2) et du liquide (8) de lubrification,
- un premier appareil (13B) consistant en un appareil thermique permettant d'apporter ou retirer des calories au liquide (8) de lubrification pour amener sa température à la valeur (T1) de consigne.

8. Installation selon la revendication 5, **caractérisée en ce que** le deuxième appareil (15), dit d'ajustement de la température du flux (10) d'air à une valeur sensiblement égale à celle (T1) de la température de consigne, consiste en un échangeur (15) thermique qui permet par ailleurs la circulation du liquide (8) de lubrification.

9. Installation selon la revendication 5, **caractérisée en ce que** le troisième dispositif (14) comprend au moins un tronçon (17) de conduite qui, d'une part, permet la circulation du liquide (8) de lubrification et, d'autre part, traverse au moins l'un des éléments constitutifs (5, 6) de la machine (1).

10. Machine dont le fonctionnement est optimisé, comprenant une installation selon l'une des revendications 5 à 9.

## Claims

1. Method of optimising the functioning of a machining centre (1) for machining at least one piece (2) by removal of material (3) by means of at least one cutting tool (4), this machining centre (1), on the one hand, comprising a certain number of constituent elements (5, 6) including a structure (5), such as a frame (5), and motor elements (6) producing actions of driving and displacement of at least one of the elements (2,4) which are the tool (4) and the piece (2), and, on the other hand, implementing an installation (7) for lubricating and cooling the tool (4) and the piece (2) by means of a fluid (8), referred to hereinafter as lubricant (8),
according to this method:
• for the lubricant (8), at least one temperature value (T1) is determined at least empirically, referred to as the reference value (T1), at which the machining centre (1) functions in a stable way, i.e. produces pieces (2) of choice and consistent quality,
• during use of the machining centre (1) for the production of pieces (2):
■■ on the one hand, the temperature of the lubricant (8) is changed in such a way as to adjust it to the reference value (T1), and
■■ on the other hand, the temperature of at least one of the components (5, 6) of this machining centre (1) is changed in such a way as to bring this temperature to a value close to that of the temperature of the lubricant (8),
this method being **characterised in that**, in order to change the value for the temperature of at least one of the constituent elements (5, 6) of the machining centre (1) and bring this temperature to a value close to the temperature reference value (T1):
- the machining centre (1) is confined at least partially in an enclosure (9) comprising at least two openings (90, 91) of section suitable for entry then exit of an air current (10),
- through agitation at the level of at least one of the openings (90, 91), an air current (10) to is made to circulate in the enclosure (9), the temperature of the air current having been changed beforehand in order to adjust it to a value substantially equal to the temperature reference value (T1).

2. Method according to claim 1, **characterised in that** to change the temperature of the air current (10) injected into the enclosure and adjust this temperature to a value substantially equal to the temperature reference value (T1), the method further comprises the step of causing the air current to exchange calories with the lubricant (8).

3. Method according to claim 1 or 2, **characterised in that** to change the temperature of the machining centre (1) and to bring this temperature to a value close to the temperature reference value (T1), the method further comprises the step of causing the lubricant (8) to circulate in contact with at least one of the different components (5, 6) of the machining centre (1).

4. Method according to any one of the claims 1 to 3, **characterised in that** to change the temperature of the lubricant (8) in such a way as to adjust this temperature to the reference value (T1), the method further comprises carrying out one of the operations consisting of supplying calories to the lubricant (8) and withdrawing calories from the lubricant (8).

5. Facility for implementing the method according to any one of the claims 1 to 4, **characterised in that** it comprises:
- a first device (12) for determining, at least empirically, at least one temperature value (T1) for the lubricant (8), referred to as the temperature reference value (T1) at which the machining centre (1) functions in a stable way, i.e. produces pieces of choice and consistent quality,
- a second device (13) for changing the temperature of the lubricant (8), during use of the machining centre (1) for the production of pieces (2), in such a way as to adjust this temperature to the temperature reference value (T1), and
- a third device (14) for changing the temperature of this machining centre (1), during use of the machining centre (1) for the production of pieces (2), in such a way as to adjust this temperature to a value close to that of the temperature of the lubricant (8),
- an enclosure (9) for at least partial confinement of the machining centre (1), this enclosure (9) comprising at least two openings (90, 91) of section suitable to allow the passage of an air current (10),
- a second apparatus (15), referred to as the apparatus for adjusting the temperature of the air current (10) to a value substantially equal to the temperature reference value (T1),
- a third apparatus (16), referred to as the apparatus for circulating the air current (10) in the enclosure (9) through at least one of the openings (90, 91) and through the first apparatus (14).

6. Facility according to claim 5, **characterised in that** the first device (12) comprises temperature sensors connected to a recording apparatus.

7. Facility according to claim 5, **characterised in that** the second device (13) comprises at least one of two elements (13A, 13B) which are:
- a receptacle (13A) for collection of fragments (3) of material detached from the piece (2) and of lubricant (8),
- a first apparatus (13B) consisting of a thermal apparatus allowing supply or withdrawal of calories to or from the lubricant (9) to bring the temperature of the lubricant to the temperature reference value (T1).

8. Facility according to claim 5, **characterised in that** the second apparatus (15), referred to as the apparatus for adjustment of the temperature of the air current (10) to a value substantially equal to the temperature reference value (T1), comprises a thermal exchanger (15) which makes possible in addition the circulation of the lubricant (8).

9. Facility according to claim 5, **characterised in that** the third device (14) comprises at least one length of pipe (17) which, on the one hand, allows circulation of the lubricant (8) and, on the other hand, passes through at least one of the different components (5,6) of the machining centre (1).

10. Machining centre whose functioning is optimised, comprising a facility according to one of the claims 5 to 9.

## Patentansprüche

1. Optimierungsverfahren zum Betrieb einer Maschine (1) zur Bearbeitung mindestens eines Werkstücks (2) durch Entfernen von Material (3) mithilfe mindestens eines Schneidewerkzeugs (4), wobei diese Maschine (1) einerseits eine gewisse Anzahl an Bauteilen (5, 6) enthält, darunter eine Struktur (5), z.B. einen Rahmen (5), und Antriebsorgane, die Vorgänge zum Antrieb und zur Verschiebung mindestens eines der Elemente (2, 4) erzeugen, d.h. des Werkzeugs (4) und des bearbeiteten Werkstücks (2), und andererseits eine Installation (7) zur Schmierung und Kühlung des Werkzeugs (4) und des Werkstücks (2) mithilfe eines Fluids (8), im Folgenden Schmierflüssigkeit (8) genannt, durchführt,
gemäß diesem Verfahren
. wird mindestens auf empirische Weise mindestens ein Temperaturwert (T1) der Schmierflüssigkeit (8), genannt Einstellwert (T1), festgelegt, bei dem die Werkzeugmaschine (1) auf eine stabile Weise funktioniert, d.h. Werkstücke (2) von ausgewählter und gleich bleibender Qualität erzeugt,
. wird bei der Verwendung der Werkzeugmaschine (1) zur Erzeugung von Werkstücken (2)
.. einerseits die Temperatur der Schmierflüssigkeit (8) so verändert, um sie dem Einstell-Temperaturwert (T1) anzupassen, und
.. andererseits der Temperaturwert mindestens eines der Bauelemente (5,6) dieser Maschine (1) so verändert, dass seine Temperatur einem Wert zugeführt wird, der demjenigen der Temperatur der Schmierflüssigkeit (8) benachbart ist,
wobei dieses Verfahren **dadurch gekennzeichnet ist, dass** zur Veränderung des Temperaturwerts mindestens eines der Bauelemente (5, 6) der Maschine (1) und dessen Zuführung an einen Wert, der dem Einstell-Temperaturwert (T1) benachbart ist
- mindestens teilweise die Maschine (1) in einen Behälter (9) eingeführt wird, der mindestens zwei Öffnungen (90, 91) mit einem Querschnitt enthält, der für den Eintritt und dann den Austritt des Luftstroms (10) geeignet ist,
- durch die Einwirkung auf der Ebene mindestens einer der Öffnungen (90, 91) im Behälter (9) ein Luftstrom (10) zum Umlauf gebracht wird, von dem vorher der Temperaturwert verändert wurde, um ihn an einen Wert anzupassen, der im Wesentlichen gleich demjenigen (T1) des Einstellwerts ist.

2. Verfahren nach Anspruch 1, **dadurch gekennzeichnet, dass** zur Veränderung des Temperaturwerts des Luftstroms (10), der in den Behälter eingeführt wird, und zu dessen Anpassung an einen Wert, der im Wesentlichen gleich dem Einstellwert (T1) ist, er zum Austausch von Kalorien mit der Schmierflüssigkeit (8) gebracht wird.

3. Verfahren nach Anspruch 1 oder 2, **dadurch gekennzeichnet, dass** zur Veränderung des Temperaturwerts der Maschine (1), und um ihn einem Wert zuzuführen, der dem Einstellwert (T1) benachbart ist, außerdem die Schmierflüssigkeit (8) im Kontakt mit mindestens einem der Bauelemente (5, 6) der Maschine (1) zum Umlauf gebracht wird.

4. Verfahren nach einem der Ansprüche 1 bis 3, **dadurch gekennzeichnet, dass** zur Veränderung des Temperaturwertes der Schmierflüssigkeit (8), um ihn dem Einstell-Temperaturwert (T1) anzupassen, mindestens einer der Vorgänge durchgeführt wird, die darin bestehen, der Schmierflüssigkeit (8) Kalorien zuzuführen oder zu entziehen.

5. Installation zum Durchführen des Verfahrens nach einem der Ansprüche 1 bis 4 , **dadurch gekennzeichnet, dass** sie Folgendes umfasst:
- eine erste Vorrichtung (12), um mindestens auf empirische Weise mindestens einen Temperaturwert (T1) der Schmierflüssigkeit (8), genannt Einstellwert (T1), festzulegen, bei dem die Werkzeugmaschine (1) auf eine stabile Weise funktioniert, d.h. Werkstücke (2) von ausgewählter und gleich bleibender Qualität erzeugt,
- eine zweite Vorrichtung (13), um bei der Verwendung der Werkzeugmaschine (1) für die Herstellung von Werkstücken (2) die Temperatur der Schmierflüssigkeit (8) so zu verändern, um sie dem Einstell-Temperaturwert (T1) anzupassen, und
- eine dritte Vorrichtung (14), um bei der Verwendung der Werkzeugmaschine (1) für die Herstellung von Werkstücken (2) den Temperaturwert dieser Maschine (1) so zu verändern, um sie einem Wert zuzuführen, der demjenigen der Schmierflüssigkeit (8) benachbart ist,
- einen Behälter (9), um die Maschine (1) mindestens teilweise zu umschließen, wobei dieser Behälter (9) mindestens zwei Öffnungen (90, 91) mit einem Querschnitt enthält, der geeignet ist, um den Durchgang eines Luftstroms (10) zu ermöglichen,
- ein zweites Gerät (15) zur Anpassung der Temperatur des Luftstroms (10) an einen Wert, der im Wesentlichen gleich dem Einstell-Temperaturwert (T1) ist,
- ein drittes Gerät (16) zum Einsatz des Luftstroms (10) im Behälter (9) durch mindestens eine der Öffnungen (90, 91) und über das erste Gerät (14).

6. Installation nach Anspruch 5, **dadurch gekennzeichnet, dass** die erste Vorrichtung (12) Temperatursonden enthält, die mit einem Aufzeichnungsgerät verbunden sind.

7. Installation nach Anspruch 5, **dadurch gekennzeichnet, dass** die zweite Vorrichtung (13) mindestens eines des zwei Elemente (13A, 13B) enthält, d.h.:
- einen Behälter (13A) zum getrennten Erfassen der Fragmente (3) des Werkstücks (2) und der Schmierflüssigkeit (8),
- ein erstes Gerät (13B), umfassend ein thermisches Gerät, das es ermöglicht, der Schmierflüssigkeit (8) Kalorien zuzuführen oder zu entziehen, um ihre Temperatur dem Einstellwert (T1) zuzuführen.

8. Installation nach Anspruch 5, **dadurch gekennzeichnet, dass** das zweite Gerät (15) zur Anpassung der Temperatur des Luftstroms (10) an eine Temperatur, die im Wesentlichen gleich der Einstelltemperatur (T1) ist, einen Wärmeaustauscher (15) umfasst, der außerdem den Umlauf der Schmierflüssigkeit (8) ermöglicht.

9. Installation nach Anspruch 5, **dadurch gekennzeichnet, dass** die dritte Vorrichtung (14) mindestens einen Leitungsabschnitt (17) enthält, der einerseits den Umlauf der Schmierflüssigkeit (8) ermöglicht und andererseits mindestens eines der Bauelemente (5, 6) der Maschine (1) durchquert.

10. Maschine, deren Betrieb optimiert ist, umfassend eine Installation nach einem der Ansprüche 5 bis 9.
